# EUROPÄISCHE PATENTANMELDUNG

(11) **EP 1 515 094 A2**
(43) Veröffentlichungstag der Anmeldung: **16.03.2005**
(21) Anmeldenummer: 04019287.4
(22) Anmeldetag: 13.08.2004
(51) Int. Cl.: F24D 13/02

(54) **Heizplatte zum elektrischen Heizen von Gebäuderäumen**

(30) Priorität: 10.09.2003 DE 20314061 U
(71) Anmelder: Haug, Rainer, 70191 Stuttgart (DE)
(72) Erfinder: Haug, Rainer, 70191 Stuttgart (DE)
(74) Vertreter: Klunker . Schmitt-Nilson . Hirsch

(57) **Zusammenfassung**

Heizplatte zum elektrischen Heizen von Gebäuderäumen (22), dadurch gekennzeichnet,
dass sie eine Grundplatte (10) aufweist, die aus mineralischem Material besteht und innere Poren aufweist;
und dass eine an das Stromnetz anschließbare, elektrische Heizmatte (12) auf einer Flachseite (14) der Grundplatte (10) angebracht ist.

## Beschreibung

Gegenstand der Erfindung ist eine Heizplatte zum elektrischen Heizen von Gebäuderäumen,
dadurch gekennzeichnet,
dass sie eine Grundplatte aufweist, die aus mineralischem Material besteht und innere Poren aufweist;
und dass eine an das Stromnetz anschließbare, elektrische Heizmatte auf einer Flachseite der Grundplatte angebracht ist.

Die erfindungsgemäße Heizplatte hat auf Grund des Materialaufbaus der Grundplatte eine wärmedämmende Wirkung. Die Heizplatte gibt ihre Wärme großflächig und großenteils als Strahlungswärme ab, so dass sich in dem Raum, in dem die Heizplatte vorgesehen ist, ein behagliches, gleichmäßiges Raumklima ergibt. Die Heizplatte ist ein sehr kompaktes, optisch äußerst unauffälliges Heizelement. Durch Wahl der Größe der installierten Heizplatte und/oder durch Wahl der Anzahl der installierten Heizplatten lässt sich sehr einfach eine Installation entsprechend dem gewünschten Heizbedarf vornehmen. Die Heizplatte lässt sich äußerst einfach installieren, vorzugsweise durch Befestigung an einer Raumwand mit einem sog. Systemkleber und durch elektrisches Anschließen. Die Grundplatte stellt gleichsam die mechanische Tragstruktur der Heizmatte dar; diese mechanische Tragstruktur ist - gemessen an ihrer Größe - leicht und hat außerdem - wie bereits erwähnt - wärmedämmende Wirkung. Außerdem sei erwähnt, dass die Grundplatte auf Grund ihres Materialaufbaus eine Feuchtigkeit ausgleichende Wirkung hat. Im Fall hoher Feuchtigkeitsbelastung der Luft nimmt die Grundplatte Feuchtigkeit auf und gibt die Feuchtigkeit über die Zeit verteilt wieder an die umgebende Luft ab, sobald die Luft hierfür aufnahmefähig ist. Diese Feuchtigkeit ausgleichende Wirkung ist zwar wegen der angebrachten Heizmatte in vielen Fällen nur abgeschwächt, aber fühlbar vorhanden. Es gibt aber auch Fälle, in denen die Feuchtigkeit ausgleichende Wirkung durchaus recht ausgeprägt vorhanden ist, z.B. wenn man an die Situation denkt, dass die Heizmatte deutlich kleiner als die betreffende Flachseite der Grundplatte ist.

Da zur Installation der erfindungsgemäßen Heizplatte keine Heizwasserleitungen verlegt werden müssen und kein Schornstein für Verbrennungsgase erforderlich ist, sind beste Voraussetzungen für die nachträgliche Installation gegeben. So kann man z.B. mit geringem Bauaufwand Kellerräume oder Dachgeschossräume oder Garagen nachträglich mit einer Heizung ausrüsten. Ein besonders bevorzugtes Einsatzgebiet sind historisch oder kulturell oder architektonisch besonders wertvolle Räume oder Gebäude, z.B. Beheizung von Kirchen, Beheizung von historischen Rathaussälen, Beheizung von Räumen in historischen Schlössern, und vieles Ähnliche mehr. Bei praktisch allen Beheizungssituationen ist die wärmedämmende Wirkung, welche die erfindungsgemäße Heizplatte mit sich bringt, von Vorteil. Ganz besonders bevorzugt ist die erfindungsgemäße Heizplatte bei Heizaufgaben, bei denen nicht eine kontinuierliche Beheizung für die gesamte kalte Jahreszeit erforderlich ist und/oder bei denen weniger hohe Raumtemperaturen als in üblichen Wohnräumen ausreichend sind (wobei man als typisches Beispiel wieder an Kirchen denken kann). Bei derartigen Heizaufgaben fällt der Nachteil, dass Wärmeerzeugung mit Strom normalerweise teurer als Wärmeerzeugung durch Verbrennung von Brennstoffen ist, nicht so stark ins Gewicht. Das rasche Einsetzen der Heizwirkung beim Heizen mit erfindungsgemäßen Heizplatten wird als zusätzlicher Vorteil erwähnt.

Mit "Anschließbarkeit an das Stromnetz" ist in erster Linie ein Betreiben der Heizplatte mit einer der üblichen Haushalts-Netzspannungen gemeint, z.B. 230 V in Westeuropa und 110 V in den Vereinigten Staaten von Amerika. Es gibt aber auch speziellere Situationen, wo man mit anderen Betriebsspannungen arbeiten kann, z.B. Forschungsstation mit eigenem Stromgenerator.

In den meisten Fällen ist nur auf einer Flachseite der Grundplatte eine Heizmatte (oder auch mehrere Heizmatten nebeneinander) angebracht. Dies ist die sinnvollste Ausführung, wenn die Heizplatte mit ihrer anderen Flachseite an einer Wand angebracht wird. Andererseits ist es durchaus möglich, die erfindungsgemäße Heizplatte als doppelseitig heizende Heizplatte auszubilden. Als Beispiel möge man sich einen Raumteiler vorstellen, der nur einen Teil der Höhe eines Raums einnimmt, oder die geländerartige Begrenzung einer Empore.

Es wird betont, dass die erfindungsgemäße Heizplatte nicht nur für Anbringung an einer Raumwand oder für Aufstellung frei in einem Raum brauchbar ist, sondern dass man mittels der erfindungsgemäßen Heizplatte auch Fußbodenheitzung und Deckenheizung realisieren kann.

In bevorzugter Ausgestaltung der Erfindung ist die - gegebenenfalls jeweilige - Flachseite der Grundplatte, auf der eine oder mehrere Heizmatten angebracht sind, zu mindestens 75%, vorzugsweise mindestens 90%, mit der (den) Heizmatte(n) bedeckt. Man nutzt also vorzugsweise die Größe der Flachseite der Grundplatte möglichst weitgehend zur Wärmeabgabe aus.

Die Heizmatte ist vorzugsweise so ausgebildet, dass sie im Betrieb an jeder Stelle ihrer Fläche im wesentlichen gleiche Wärmeerzeugung hat. Man arbeitet also vorzugsweise nicht etwa mit Widerstandsdrähten (was hohe Wärmeerzeugung an der Stelle des betreffenden Widerstandsdrahts, aber im Grund keine Wärmeerzeugung im Abstandsbereich benachbarter Widerstandsdrähte bedeuten würde), sondern mit technischen Ausführungen, bei denen über die Fläche verteilt tatsächlich überall im wesentlichen gleiche Wärmeerzeugung stattfindet.

Eine besonders bevorzugte Ausführungsform der Heizplatte weist eine Heizmatte auf, die als im Betrieb elektrisch leitenden, Wärme erzeugenden Bestandteil Kohlefasern aufweist. Die Kohlefasern stellen insgesamt ein Flächengebilde dar, bei dem es nirgendwo kleine Flächenelemente ohne Wärmeerzeugung gibt. Das Flächengebilde aus Kohlefaser kann insbesondere ein Gewebe oder ein Vlies oder ein Gelege aus Kohlefasern sein; derartige Gebilde sind aus der Herstellung von faserverstärkten Kunststoff-Bauteilen bekannt. Es muss nicht sein, dass die Kohlefasern der alleinige, elektrisch leitende Bestandteil der Heizmatte sind. Es können einer oder mehrere, zusätzliche, elektrisch leitende Bestandteile hinzu kommen, insbesondere Ruß.

Es ist besonders bevorzugt, die Heizmatte als Kunststoffmatte mit eingebetteten Kohlefasern (optional Zusatz an anderem, elektrisch leitenden Bestandteil) vorzusehen. Eine solche Kunststoffmatte lässt sich bei der Herstellung der Heizplatte bequem handhaben.

Vorzugsweise ist die Heizmatte auf ihrer der Grundplatte abgewandten Seite überdeckt, besonders bevorzugt von einer Spachtelmasse überdeckt. Eine andere bevorzugte Überdeckung wäre eine Tapete. Die Überdeckung macht die Heizmatte unsichtbar, und man sieht überhaupt nicht mehr, dass man ein Heizelement statt einer Raumwand vor sich hat. Man kann auch, vorzugsweise, die Heizmatte mittels der genannten Spachtelmasse (oder einer anderen Spachtelmasse) an der Grundplatte anbringen. Auf diese Weise kann man praktisch in einem einzigen Arbeitsgang Anbringung der Heizmatte und Überdeckung der Heizmatte bewerkstelligen. Das Arbeiten mit einer Spachtelmasse ist auch dann sehr praktisch, wenn man die Abstände zwischen benachbarter Heizmatten oder die Randstreifen zwischen den Rändern der Heizmatte und dem Rand der Heizplatte ausfüllen möchte.

Vorzugsweise ist die Heizplatte rechteckig mit einer Länge von 50 bis 150 cm, besonders 80 bis 120 cm in der einen Richtung und mit einer Länge von 40 bis 120 cm, besonders bevorzugt 60 bis 90 cm, in der anderen Richtung. Grundplatten in diesem Größenbereich lassen sich bequem herstellen und handhaben.

Einerseits ist es als besonders praktisch bevorzugt, die Grundplatte (besonders bevorzugt nur auf einer Seite) mit einer einzigen Heizmatte auszustatten (die besonders bevorzugt nahezu die gesamte Fläche der Flachseite der Grundplatte einnimmt). Wenn ein Hersteller ein Produktionsprogramm von mehreren Heizplatten unterschiedlicher Größe hat, würde er in diesem Fall Heizmatten unterschiedlicher Größe verarbeiten. Andererseits gibt es jedoch Herstellungsabläufe, bei denen es praktischer ist, zumindest bei den Heizplatten größeren Formats mit mehreren Heizmatten nebeneinander zu arbeiten. Dies kann darauf hinaus laufen, dass ein Hersteller Heizmatten nur eines Formats (oder nur sehr weniger unterschiedlicher Formate) verarbeitet und dennoch eine größere Anzahl unterschiedlicher Heizplatten-Formate liefern kann.

Vorzugsweise ist die Grundplatte der Heizplatte 15 bis 70 mm, besonders bevorzugt 20 bis 40 mm, dick. Dieser Dickenbereich stellt einen optimalen Kompromiss unter den Gesichtspunkten hinreichender mechanischer Festigkeit, leichter Handhabbarkeit beim Anbringen im Gebäuderaum und sinnvoller Wärmedämmwirkung dar.

Vorzugsweise besteht bei der Heizplatte die Grundplatte im wesentlichen aus Sand, mineralischem Bindemittel, optional mindestens einem porösen Zuschlagstoff, und optional einem Porosierungsmittel in der Ausgangszusammensetzung. Ein nicht-zementiges Kalkbindemittel ist bevorzugt. Als Zuschlagstoff kommen insbesondere in Betracht Bims, geblähtes Perlit, Blähton, Blähglimmer, Blähglas, geschäumtes Polystyrol. Als Porosierungsmittel kommen insbesondere in Betracht Tenside, Aluminiumpulver, Peroxoverbindungen. Es gibt aber durchaus Herstellungsverfahren, bei denen die Poren in der Grundplatte durch Verdampfung des in der Ausgangszusammensetzung enthaltenen Wassers erzeugt werden und die ohne gesondertes Porosierungsmittel auskommen. Platten, welche die vorstehende Spezifikation der Zusammensetzung erfüllen, sind bekannt. Außer den genannten Bestandteilen können weitere Bestandteile in kleinerer Menge enthalten sein.

Vorzugsweise hat bei der erfindungsgemäßen Heizplatte die Grundplatte ein spezifisches Gewicht von unter 250 kg/m³. Geringes spezifisches Gewicht bedeutet gute Handhabbarkeit am Bau, geringen Preis pro Flächeneinheit der Grundplatte und gute Wärmedämmwirkung. Andererseits soll die Heizplatte eine sinnvolle mechanische Festigkeit haben, was einer zu weit gehenden Absenkung des spezifischen Gewichts der Grundplatte Grenzen setzt.

Vorzugsweise ist die erfindungsgemäße Heizplatte so ausgelegt, dass sie im Betrieb pro Flächeneinheit ihrer Flachseite eine Wärmeerzeugung von 100 bis 300 W/m², besonders bevorzugt 140 bis 250 W/m², hat. Derartige Wärmeerzeugungsdichten führen - abhängig von der im Raum herrschenden Lufttemperatur - zu angenehmen Oberflächentemperaturen der Wärme abgebenden Flachseite der Heizplatte im Betrieb. Außerdem erreicht man, dass mit einer kleinen Anzahl (wenn man es mit einem Raum zu tun hat, der eine für Wohnräume übliche Größe hat) oder einer überschaubaren Anzahl (wenn man es mit einem bedeutend größeren Raum zu tun hat) von Heizplatten ein sinnvolles Erwärmungsergebnis erzielt.

Weiterer Gegenstand der Erfindung ist ein Raum eines Gebäudes,
dadurch gekennzeichnet,
dass er an der Innenseite mindestens einer Wand mindestens eine Heizplatte, wie sie in der vorliegenden Anmeldung offenbart ist, aufweist.

Vorzugsweise weist der Raum mehrere erfindungsgemäße Heizplatten auf, besonders bevorzugt an mindestens einer Wand mehrere Heizplatten übereinander und/oder nebeneinander. Bei vielen Einsatzfällen reicht es aus, Heizplatten nur an einer Wand vorzusehen, z.B. an einer Außenwand des Gebäudes. Es gibt aber auch Einsatzfälle, bei denen es im Interesse gleichmäßiger Wärmeeinbringung in den Raum vernünftiger ist, mehrere Wände mit Heizplatten zu versehen. Die Situation, dass der Raum nur mit einer einzigen Heizplatte versehen ist, dürfte eine eher seltene Situation sein. Mehrere Heizplatten können, müssen aber nicht, dicht an dicht nebeneinander und/oder übereinander positioniert sein.

Nach einer bevorzugten Weiterbildung der Erfindung weist der Raum an der Innenseite mindestens einer Wand mindestens eine Vorsatzplatte auf, die aus mineralischem Material besteht und innere Poren aufweist, besonders bevorzugt materialmäßig im wesentlichen so aufgebaut ist wie die Grundplatte der erfindungsgemäßen Heizplatte. Die Vorsatzplatte kann (bzw. die Vorsatzplatten können) an der gleichen Wand wie die Heizplatte(n) angebracht sein oder an einer anderen Wand (bzw. Wänden) des Raums. Im erstgenannten Fall sind die Vorsatzplatten in der Regel in solchen Bereich der Wand angebracht, wo keine Heizplatten angebracht sind. Die Vorsatzplatten dienen der Wärmedämmung und dem zeitlichen Feuchtigkeitsausgleich, wie anfangs im Zusammenhang mit der Grundplatte der erfindungsgemäßen Heizplatte geschildert.

Es ist ein für die Praxis sehr wesentlicher Vorteil der Erfindung, dass die erfindungsgemäße Heizplatte(n) mit der Vorsatzplatte(n), wie sie im vorstehenden Absatz beschrieben ist (sind), optimal kombiniert werden kann (können). Man kann insbesondere die Grundplatten für die erfindungsgemäßen Heizplatten aus gleicher Produktion nehmen wie die Vorsatzplatten. In diesem Fall werden die Heizplatten wegen der jeweils aufgebrachten Heizmatte etwas dicker, was man bei kombinierter Platzierung von Heizplatten und Vorsatzplatten an einer Wand z.B. durch eine etwas dickere Schicht von Systemkleber bei der Anbringung der betreffenden Vorsatzplatte ausgleichen kann. Eine andere Möglichkeit besteht darin, die Grundplatten für die Heizplatten so viel dünner zu produzieren, dass sich für die jeweils mit Heizmatte komplettierten Heizplatten praktisch die gleiche Dicke wie bei den Vorsatzplatten ergibt. Vorzugsweise sind die Lieferformate der Vorsatzplatten mindestens zum Teil die gleichen wie die Lieferformate der Heizplatten. Insbesondere bei dem als bevorzugt genannten Materialaufbau der Vorsatzplatten lassen sich diese sehr einfach schneiden, z.B. mittels einer motorischen Säge. Man kann infolgedessen die Lücken, die sich bei gegebener Wandlänge bzw. Deckenhöhe und Nutzung der lieferbaren Formate der Heizplatten ergeben, problemlos mit abgeschnittenen Vorsatzplatte-Stücken auffüllen.

Es ist, wie bereits angedeutet, besonders bevorzugt, bei dem Raum an der Innenseite mindestens einer Wand sowohl mehrere erfindungsgemäße Heizplatten als auch mehrere der genannten Vorsatzplatten nebeneinander und/oder übereinander anzubringen. Dabei ist ganz besonders diejenige Situation bevorzugt, bei der die gesamte betrachtete Wand mit diesen Platten in Kombination verkleidet ist. Eine für die Praxis besonders bevorzugte Ausführung ergibt sich dadurch, dass man in einem unteren Bereich der Höhe der Wand mehrere erfindungsgemäße Heizplatten nebeneinander positioniert, während man in dem restlichen, oberen Bereich der Höhe der Wand mehrere der beschriebenen Vorsatzplatten nebeneinander positioniert.

Es ist bereits angesprochen worden, dass man die erfindungsgemäßen Heizplatten und die beschriebenen Vorsatzplatten vorzugsweise mittels eines sog. Systemklebers an der Raumwand befestigen kann. Es gibt Systemkleber, die mehr mörtelartig mit die Haftfestigkeit steigernden Zusätzen sind. Es gibt aber auch Systemkleber, die einen hohen Gehalt an Kunststoff haben und praktisch kein mineralisches Bindemittel enthalten. Nach Anbringung der Platten an der Wand kann man z.B. die Fugen zwischen den Platten verspachteln und anschließend die Wand streichen. Eine Alternative ist das Aufkleben einer Tapete, gegebenenfalls ohne vorheriges Verspachteln der Fugen.

Vorstehend sind an mehreren Stellen Ausführungen zu Vorzugsmerkmalen der Heizmatte (im Singular) der erfindungsgemäßen Heizplatte gemacht worden. Einzelne oder mehrere der Vorzugsmerkmale sind dann, wenn die Heizplatte mehrere Heizmatten aufweist, vorzugsweise bei allen vorhandenen Heizmatten dieser Heizmatte verwirklicht.

Die Erfindung und bevorzugte Ausgestaltungen der Erfindung werden nachfolgend an Hand von schematisiert zeichnerisch dargestellten Ausführungsbeispielen noch näher erläutert. Es zeigt
Fig. 1 eine perspektivische Darstellung einer Heizplatte, wobei die Dicke der Heizplatte in Relation zu Länge und Breite der Heizplatte übertrieben gezeichnet ist;
Fig. 2 einen Schnitt der Heizplatte von Fig. 1 längs II-II;
Fig. 3 eine Draufsicht auf eine Flachseite der Heizplatte von Fig. 1, wobei eine Überdeckung einer Heizmatte der Heizplatte weggeschnitten ist;
Fig. 4 eine perspektivische Darstellung einer Ecke eines Raums eines Gebäudes.

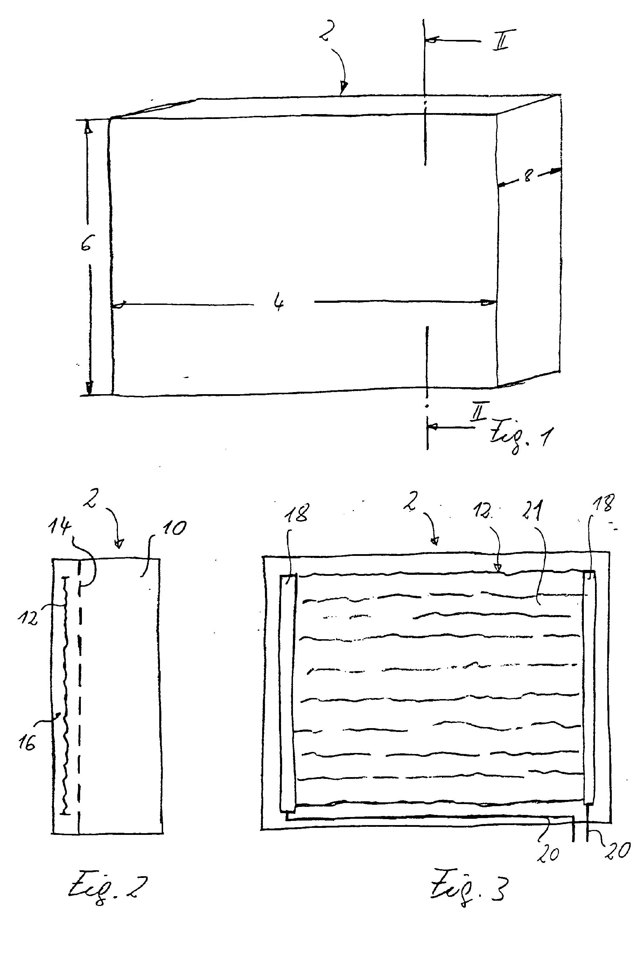

Die in Fig. 1 gezeichnete Heizplatte 2 hat insgesamt die Gestalt eines flachen Quaders mit einer Länge 4 von 1000 mm, einer Breite 6 von 750 mm und einer Dicke 8 von 30 mm.

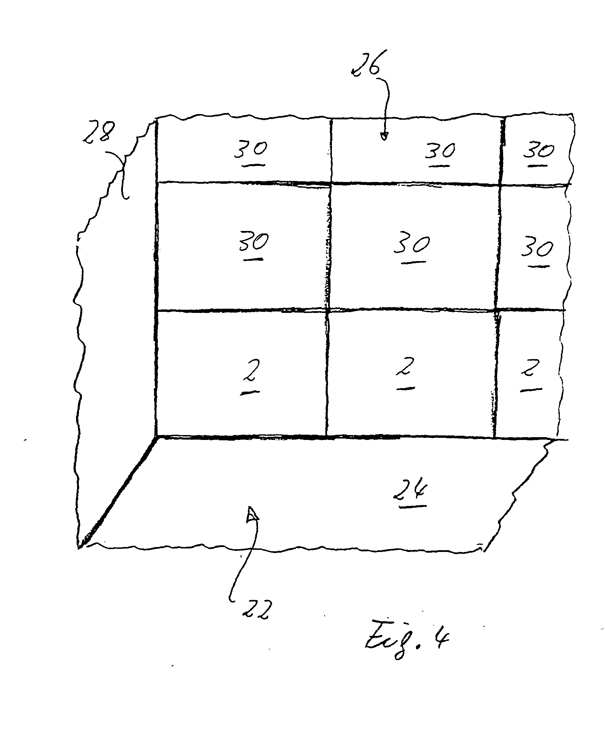

In dem Schnitt, der in Fig. 2 gezeichnet ist, sieht man, dass die Heizplatte 2 aus einer Grundplatte 10 mit einer Dicke von 24 mm und einer Heizmatte 12, die an der in Fig. 2 nach links weisenden Flachseite 14 der Grundplatte 10 an dieser mittels einer Spachtelmasse 16 befestigt ist, besteht. Die genannte Flachseite 14, d.h. die Grenzfläche zwischen der Grundplatte 10 und der Spachtelmasse 16, ist in unterbrochener Linie eingezeichnet. Die Spachtelmasse 16 überdeckt die in Fig. 2 nach links weisende Fläche der Heizmatte 12, so dass dort eine im wesentlichen ebene Abschlussfläche der Heizplatte 2 gebildet ist und die Heizmatte 12 nicht sichtbar ist.

In Fig. 3 ist gleichsam die Situation vor Aufbringung des die Heizmatte 12 überdeckenden Teils der Spachtelmasse 16 gezeichnet, so dass man die Konfiguration der Heizmatte 12 sehen kann. Die Heizmatte 12 ist in der Blickrichtung der Fig. 3, d.h. auf eine ihrer zwei Flachseiten, im wesentlichen rechteckig und nur wenig kleiner als die Flachseite 14 der Grundplatte 10. An jedem ihrer Querränder weist die Heizmatte 12 einen Einfassrand 18 aus einem elektrisch gut leitenden Material, z.B. Kupferfolie, auf. Jeder Einfassrand 18 ist mit einem isolierten Stromleiter 20 verbunden, und die zwei Stromleiter 20 sind an einem Rand der Heizplatte 2 herausgeführt. Mittels dieser zwei Stromleiter 20 lässt sich die Heizplatte 2 an ein Stromnetz anschließen. Dann fließt Strom durch ein Flächengebilde 21 aus Kohlefasern, welches sich zwischen den zwei Einfassleisten 18 erstreckt. Statt einer einzigen Heizmatte 12, wie gezeichnet, können auch mehrere Heizmatten 12 mit geringem oder größerem Abstand nebeneinander auf der Flachseite 14 der Grundplatte 10 angebracht sein. Sie können elektrisch parallel oder in Reihe geschaltet sein. Am günstigsten ist es, wenn auch in diesem Fall nur ein einziges Paar von Stromleitern 20 von der Heizplatte 10 wegführt.

Fig. 4 zeigt einen "Eckausschnitt" eines Raums 22 eines Gebäudes. Man erkennt einen Teil des Fußbodens 24, einen Teil einer ersten Wand 26 und einen Teil einer zweiten Wand 28. Die erste Wand 26 ist in Gänze mit an ihrer Innenseite angebrachten Platten verkleidet; es handelt sich z.B. um eine Außenwand des Raums 22. Die zweite Wand 28 ist nicht mit Platten verkleidet; es handelt sich z.B. um eine Wand mit Fenstern oder um eine Innenwand des Raums 22.

An der ersten Wand 26 sieht man eine unterste, erste Reihe von Heizplatten 2, die dicht an dicht nebeneinander positioniert sind. Darüber sieht man eine zweite Reihe von Platten 30. Es handelt sich um Platten, die materialmäßig so ausgebildet sind wie die Grundplatten 10 der Heizplatten 2 und die im allgemeinen Teil der Beschreibung als Vorsatzplatten bezeichnet worden sind. Bei diesem Ausführungsbeispiel haben die Platten 30 ebenfalls eine Dicke von 30 mm, sind also etwas dicker als die Grundplatten 10 der Heizplatten 2. Schließlich sieht man eine darüber positionierte, dritte Reihe von Platten 30. Die Heizplatten 2, die Vorsatzplatten 30 und nicht gezeichnete Plattenabschnitte zum Ausfüllen der Lücken verkleiden die gesamte erste Wand 26 von links nach rechts und von unten nach oben.

An Hand von Fig. 4 wird anschaulich sichtbar, wie man mittels der Erfindung den Raum 22 mit einer Heizung nachrüsten bzw. heizungstechnisch modernisieren kann und zugleich hinsichtlich Wärmedämmung und Feuchtigkeitsregulierung auf einen besseren Stand bringen kann, und zwar mit einem vergleichsweise kleinen Einsatz von Umbauarbeit, geringer Schmutzbelastung, geringem Eingriff bei Nachbarräumen und dergleichen. Es müssen lediglich die Heizplatten 2 angebracht und elektrisch angeschlossen werden und die Vorsatzplatten 30 angebracht werden. Danach wird überstrichen oder übertapeziert. Der Raum 22 ist nur minimal kleiner geworden und ist in seinem Aussehen unverändert geblieben. Die innere Wandverkleidung aus den Platten 2 und 30 schließt naturgemäß auch etwaige Ritzen der ersten Wand 26 (z.B. alte Fachwerkhäuser!) winddicht ab.

Es wird betont, dass selbstverständlich auch Wände, die Fenster und/oder Türen enthalten, erfindungsgemäß mit Heizplatten 2 und gegebenenfalls zusätzlich Vorsatzplatten 30 versehen werden können, und zwar in den Wandbereichen zwischen oder neben den Fenstern bzw. Türen.

## Patentansprüche

1. Heizplatte zum elektrischen Heizen von Gebäuderäumen (22),
**dadurch gekennzeichnet,**
**dass** sie eine Grundplatte (10) aufweist, die aus mineralischem Material besteht und innere Poren aufweist;
und **dass** eine an das Stromnetz anschließbare, elektrische Heizmatte (12) auf einer Flachseite (14) der Grundplatte (10) angebracht ist.

2. Heizplatte nach Anspruch 1,
**dadurch gekennzeichnet, dass** nur auf einer Flachseite (14) der Grundplatte (10) eine oder mehrere Heizmatten (12) angebracht sind.

3. Heizplatte nach Anspruch 1 oder 2,
**dadurch gekennzeichnet, dass** die - ggf. jeweilige - Flachseite (14) der Grundplatte (10), auf der eine oder mehrere Heizmatten (12) angebracht sind, zu mindestens 75%, vorzugsweise mindestens 90%, mit der (den) Heizmatte(n) (12) bedeckt ist.

4. Heizplatte nach einem der Ansprüche 1 bis 3,
**dadurch gekennzeichnet, dass** die Heizmatte (12) so ausgebildet ist, dass sie im Betrieb an jeder Stelle ihrer Fläche im wesentlichen gleiche Wärmeerzeugung hat.

5. Heizplatte nach einem der Ansprüche 1 bis 4,
**dadurch gekennzeichnet, dass** die Heizmatte (12) als im Betrieb elektrisch leitender, Wärme erzeugender Bestandteil Kohlefasern aufweist.

6. Heizplatte nach Anspruch 5,
**dadurch gekennzeichnet, dass** die Heizmatte (12) eine Kunststoffmatte mit eingebetteten Kohlefasern ist.

7. Heizplatte nach einem der Ansprüche 1 bis 6,
**dadurch gekennzeichnet, dass** die Heizmatte (12) auf ihrer der Grundplatte (10) abgewandten Seite überdeckt ist.

8. Heizplatte nach Anspruch 7,
**dadurch gekennzeichnet, dass** die Heizmatte (12) mit einer Spachtelmasse überdeckt ist.

9. Heizplatte nach einem der Ansprüche 1 bis 8,
**dadurch gekennzeichnet, dass** die Heizmatte mittels einer Spachtelmasse (16) an der Grundplatte (10) angebracht ist.

10. Heizplatte nach einem der Ansprüche 1 bis 9,
**dadurch gekennzeichnet, dass** sie rechteckig ist mit einer Länge von 50 bis 150 cm, vorzugsweise 80 bis 120 cm, in der einen Richtung und mit einer Länge von 40 bis 120 cm, vorzugsweise 60 bis 90 cm, in der anderen Richtung.

11. Heizplatte nach einem der Ansprüche 1 bis 10,
**dadurch gekennzeichnet, dass** ihre Grundplatte (10) 15 bis 70 mm, vorzugsweise 20 bis 40 mm, dick ist.

12. Heizplatte nach einem der Ansprüche 1 bis 11,
**dadurch gekennzeichnet, dass** ihre Grundplatte (10) im wesentlichen aus Sand, mineralischem Bindemittel, optional mindestens einem porösen Zuschlagstoff, und optional einem Porosierungsmittel in der Ausgangszusammensetzung besteht.

13. Heizplatte nach einem der Ansprüche 1 bis 12,
**dadurch gekennzeichnet, dass** ihre Grundplatte (10) ein spezifisches Gewicht von unter 250 kg/m³ hat.

14. Heizplatte nach einem der Ansprüche 1 bis 13,
**dadurch gekennzeichnet, dass** sie so ausgelegt ist, dass sie im Betrieb pro Flächeneinheit ihrer Flachseite (14) eine Wärmeerzeugung von 100 bis 300 W/m², vorzugsweise 140 bis 250 W/m², hat.

15. Raum eines Gebäudes,
**dadurch gekennzeichnet, dass** er an der Innenseite mindestens einer Wand (26) mindestens eine Heizplatte (2) gemäß einem der Ansprüche 1 bis 14 aufweist.

16. Raum nach Anspruch 15,
**dadurch gekennzeichnet, dass** er mehrere Heizplatten (2) gemäß einem der Ansprüche 1 bis 14 aufweist, vorzugsweise an mindestens einer Wand (26) mehrere Heizplatten (2) nebeneinander und/oder übereinander.

17. Raum nach Anspruch 15 oder 16,
**dadurch gekennzeichnet, dass** er an der Innenseite mindestens einer Wand (26) mindestens eine Vorsatzplatte (30) aufweist, die aus mineralischem Material besteht und innere Poren aufweist, vorzugsweise materialmäßig im wesentlichen so aufgebaut ist wie die Grundplatte (10) der Heizplatte (2) gemäß einem der Ansprüche 1 bis 14.

18. Raum nach Anspruch 17,
**dadurch gekennzeichnet, dass** er an der Innenseite mindestens einer Wand (26) sowohl mehrere Heizplatten (2) gemäß einem der Ansprüche 1 bis 14 als auch mehrere dieser Vorsatzplatten (30) aufweist.

19. Raum nach Anspruch 18,
**dadurch gekennzeichnet, dass** er in einem unteren Bereich der Höhe der Wand (26) mehrere dieser Heizplatten (2) und in einem oberen Bereich der Höhe der Wand (26) mehrere dieser Vorsatzplatten (30) aufweist.
